# FASCICULE DE BREVET EUROPEEN

(11) **EP 4 127 648 B1**
(45) Date de publication et mention de la délivrance du brevet: **27.12.2023**
(21) Numéro de dépôt: 21709996.9
(22) Date de dépôt: 09.03.2021
(51) Int. Cl.: G01N 1/22, G01N 30/08, G01N 1/40, B01L 3/00

(54) **PRÉ-CONCENTRATEUR MICROFLUIDIQUE**
MIKROFLUIDISCHER VORKONZENTRATOR
MICROFLUIDIC PRECONCENTRATOR

(30) Priorité: 24.03.2020 FR 2002843
(43) Date de publication de la demande: 08.02.2023
(73) Titulaire: Centre national de la recherche scientifique, 75016 Paris (FR); Université de Strasbourg, 67081 Strasbourg cedex (FR)
(72) Inventeur: LE CALVE, Stéphane, 67087 STRASBOURG Cedex (FR); RODRIGUES CUEVAS, Alberto, 67087 STRASBOURG Cedex (FR); LARA-IBEAS, Irene, 67087 STRASBOURG Cedex (FR); LEPRINCE, Agathe, 67087 STRASBOURG Cedex (FR); WOLF, Michel, 67087 STRASBOURG Cedex (FR)
(74) Mandataire: Hautier IP
(86) Numéro de dépôt international: PCT/EP2021/055932
(87) Numéro de publication internationale: WO 2021/190918

(56) Documents cités:
- WO-A1-2012/109237
- CAMARA E H M ET AL: "A micro gas preconcentrator with improved performance for pollution monitoring and explosives detection", ANALYTICA CHIMICA ACTA, ELSEVIER, AMSTERDAM, NL, vol. 688, no. 2, 24 décembre 2010 (2010-12-24), pages 175-182, XP028145910, ISSN: 0003-2670, DOI: 10.1016/J.ACA.2010.12.039 [extrait le 2011-01-14]
- IRENE LARA-IBEAS ET AL: "Sub-ppb Level Detection of BTEX Gaseous Mixtures with a Compact Prototype GC Equipped with a Preconcentration Unit", MICROMACHINES, vol. 10, no. 3, 13 mars 2019 (2019-03-13), page 187, XP055748267, DOI: 10.3390/mi10030187
- RODRÍGUEZ-CUEVAS ALBERTO ET AL: "Easy-to-manufacture micro gas preconcentrator integrated in a portable GC for enhanced trace detection of BTEX", SENSORS AND ACTUATORS B: CHEMICAL, ELSEVIER BV, NL, vol. 324, 14 août 2020 (2020-08-14), XP086282491, ISSN: 0925-4005, DOI: 10.1016/J.SNB.2020.128690 [extrait le 2020-08-14]

## Description

### Domaine de l'invention

La présente invention concerne un pré-concentrateur microfluidique adapté pour recevoir un échantillon gazeux comprenant des polluants gazeux, tels que les composés organiques volatils, pour concentrer les polluants gazeux et les transférer vers un dispositif d'analyse. La présente invention concerne également un ensemble comprenant une enceinte, un pré-concentrateur microfluidique, des connecteurs et un moyen de maintien du pré-concentrateur microfluidique à l'intérieur de l'enceinte.

### Art antérieur

La pollution de l'air, extérieure et intérieure, représente aujourd'hui un enjeu majeur pour la santé publique et l'environnement. Les polluants gazeux sont présents dans notre environnement et ont de nombreuses origines. Ils peuvent par exemple provenir directement des rejets industriels ou automobiles ou de feux de forêt, ou indirectement par oxydation de composés volatils organiques. Les polluants gazeux peuvent également être détectés dans l'air exhalé par l'Homme. En effet, certains composés organiques volatils (COVs) sont présents dans l'air exhalé de personnes souffrant de maladies telles que des cancers des poumons et présentent des signatures moléculaires en fonction de la maladie. Les COVs mono-aromatiques et plus particulièrement les composés BTEX (Benzène, Toluène, Éthylbenzène et Xylènes) sont spécialement connus pour leur toxicité vis-à-vis des organismes et leur impact environnemental. Bien que ceux-ci soient des produits pétrochimiques de valeur importante, ils sont également désignés comme perturbateurs endocriniens.

Des instruments d'analyse sont utilisés pour détecter, déterminer et/ou mesurer la quantité de polluants gazeux dans l'air tels que, par exemple, des spectromètres UV-visible, infra-rouge, des spectromètres de masse à injection directe, des chromatographes en phase gazeuse équipés de détecteur à ionisation de flamme, à photo-ionisation ou à capture d'électrons. En outre, la chromatographie en phase gazeuse couplée à la spectrométrie de masse permet par exemple la détection et l'identification de tels composés en très petites quantités, de l'ordre de 1 partie par milliard (ppb - *part per billion).* Un échantillon gazeux comprenant une concentration initiale de ces polluants gazeux doit être fourni à de tels dispositifs d'analyse.

Cependant, des concentrations très faibles de composés organiques volatils, par exemple, par exemple de l'ordre de 1 partie par billion (ppt - *part per trillion),* ne peuvent pas être détectées directement car celles-ci sont inférieures aux limites de détection des instruments analytiques. Afin de surmonter ces inconvénients de limite de détection, des pré-concentrateurs ont été développés.

Ces pré-concentrateurs comprennent un moyen d'adsorption qui permet de piéger de tels polluants gazeux lorsque le moyen d'adsorption est traversé par l'échantillon gazeux comprenant une concentration initiale en polluants gazeux. Ensuite, les polluants gazeux adsorbés par le moyen d'adsorption, de préférence la totalité des polluants gazeux de l'échantillon gazeux, sont désorbés du moyen d'adsorption par un flux de gaz pur et sont ainsi transférés, par exemple vers un dispositif d'analyse. Les polluants gazeux désorbés sont donc transférés dans un volume gazeux inférieur au volume de l'échantillon gazeux qui a traversé le moyen d'adsorption de telle manière que les polluants gazeux sont transférés par exemple vers un dispositif d'analyse selon une concentration en phase gazeuse supérieure à la concentration initiale en polluants gazeux dans l'échantillon gazeux.

De tels moyens d'adsorption sont notamment décrits dans la demande WO2012135277 A1 qui divulgue un pré-concentrateur chimique pour collecter et pré-concentrer une substance chimique dans un échantillon gazeux, le pré-concentrateur comprenant une structure de support présentant une surface, un circuit d'air dirigé vers cette surface et une couche sur la surface de la structure de support, la couche comprenant un composé chimique réactif capable de former un conjugué avec la substance chimique.

Certains pré-concentrateurs de l'état de l'art utilisent la désorption thermique afin de désorber les polluants gazeux de l'échantillon gazeux qui ont été préalablement adsorbés dans le moyen d'adsorption. Un tel pré-concentrateur est décrit dans la demande WO2012109237 A1.

De tels préconcentrateurs sont placés dans un système comprenant un moyen de chauffage, le système étant généralement relié à un dispositif d'analyse. Des électrovannes, notamment à 3 voies, sont tout d'abord configurées pour que l'échantillon gazeux traverse le moyen d'adsorption. Ainsi, une fois que l'échantillon gazeux a traversé le moyen d'adsorption et que les polluants gazeux de l'échantillon gazeux ont été adsorbés par le moyen d'adsorption, les électrovannes sont reconfigurées pour qu'un gaz de désorption traverse le moyen d'adsorption et le pré-concentrateur est chauffé de manière à désorber les polluants gazeux du moyen d'adsorption. Une fois que les polluants gazeux désorbés du moyen d'adsorption ont été transférés dans le gaz de désorption vers un dispositif d'analyse, le chauffage est arrêté. Le gaz ainsi transféré vers le dispositif d'analyse comprend une concentration en polluants gazeux supérieure à la concentration en polluants gazeux de l'échantillon gazeux. Le retour à la température ambiante du moyen d'adsorption est ensuite nécessaire pour un nouveau cycle. Des cycles d'adsorption, de désorption et de transfert des polluants gazeux concentrés sont ainsi répétés afin d'obtenir plusieurs analyses sur divers échantillons gazeux. La possibilité de répéter de manière rapide des cycles d'adsorption, désorption et transfert de polluants gazeux est particulièrement importante afin d'obtenir des résultats d'analyse plus rapidement et de multiplier le nombre de résultats. Parfois, afin de purger le moyen d'adsorption de tels pré-concentrateurs, celui-ci est chauffé à une température supérieure à celle nécessaire à la désorption des polluants gazeux qui n'auraient pas été désorbés préalablement, les électrovannes étant par exemple configurées pour rejeter le gaz à l'air libre.

La désorption est préférentiellement effectuée dans un sens opposé à l'adsorption des polluants gazeux de manière à désorber les polluants gazeux les moins volatils qui auront été adsorbés dans la zone du moyen d'adsorption la plus proche de l'entrée par laquelle l'échantillon gazeux a été injecté.

Cependant, les moyens de chauffage des pré-concentrateurs standards de l'état de l'art utilisant la désorption thermique requièrent une puissance importante, généralement supérieure à quelques centaines de watts, afin de chauffer le moyen d'adsorption et d'obtenir la désorption suffisamment rapide des polluants gazeux. Ainsi, des pré-concentrateurs microfluidiques en silicium comprenant des dépôts de circuits métalliques utilisés en tant que résistances chauffantes ont été développés car ils consomment moins d'énergie. Cependant, la fabrication de tels pré-concentrateurs nécessite des installations spécialisées, telles que des salles blanches et les coûts associés de micro-fabrication sont élevés. De plus, ces dispositifs en silicium sont fragiles, peu robustes et sont généralement associés à des problèmes d'étanchéité des connectiques spécifiques à de tels dispositifs. Également, les outils nécessaires à leur fabrication sont coûteux et les frais de fonctionnement et de maintenance sont élevés. Ainsi, la production et l'utilisation de tels pré-concentrateurs en silicium n'est pas viable industriellement.

De plus, les dispositifs d'analyse utilisés actuellement sont volumineux, lourds et nécessitent une alimentation secteur en raison de leur consommation énergétique importante pour alimenter les moyens de chauffage des pré-concentrateurs. Ainsi, une utilisation pour mesure et analyse sur site avec de tels dispositifs est limitée.

Parmi les pré-concentrateurs de polluants gazeux connus de l'état de la technique antérieure peuvent également être mentionnés ceux décrits par CAMARA E.H.M. et al: "A micro gas preconcentrator with improved performance for pollution monitoring and explosives détection", ANALYTICA CHIMICA ACTA, ELSEVIER, AMSTERDAM, NL, vol. 688, no. 2, 24 décembre 2010, pages 175-182 et par IRENE LARA-IBEAS et al: "Sub-ppb Level Détection of BTEX Gaseous Mixtures with a Compact Prototype GC Equipped with a Preconcentration Unit", MICROMACHINES, vol. 10, no. 3, 13 mars 2019, page 187.

Dans le domaine des pré-concentrateurs de polluants gazeux tels que décrits précédemment, il est ainsi recherché des pré-concentrateurs fiables et robustes, peu volumineux, qui soient utilisables sur site et qui permettent une réduction du temps nécessaire à un cycle d'adsorption, désorption et transmission des polluants gazeux afin de répéter ces cycles plus rapidement. Également, il est recherché une réduction du coût de production et du coût d'utilisation, en particulier une réduction des coûts de fonctionnement et de maintenance, de ces pré-concentrateurs.

### Description brève de l'invention

L'invention concerne un pré-concentrateur microfluidique adapté pour recevoir un échantillon gazeux comprenant des polluants gazeux, concentrer les polluants gazeux et les transférer vers un dispositif d'analyse, le pré-concentrateur microfluidique comprenant un circuit microfluidique permettant la circulation d'un gaz pur ou comprenant des polluants gazeux et comprenant au moins une entrée adaptée pour recevoir ledit gaz et au moins une sortie adaptée pour transférer ledit gaz vers un dispositif d'analyse; un moyen d'adsorption des polluants gazeux à l'intérieur du circuit microfluidique entre l'au moins une entrée et l'au moins une sortie ; et un moyen de chauffage d'une puissance inférieure ou égale à 100 watts, de préférence inférieure ou égale à 50 watts, le circuit microfluidique et le moyen de chauffage étant adaptés pour chauffer le moyen d'adsorption à une température comprise entre 120 et 350°C, de préférence entre 150 et 250°C.

Particulièrement, le circuit microfluidique est en un matériau choisi parmi les métaux, le verre ou les polymères ou une combinaison d'au moins deux de ces matériaux.

Par « circuit microfluidique », il est entendu un réseau de tubes, tubulures, micro-tubulures dont au moins une des dimensions est inférieure à 1 mm, formant des voies d'écoulement d'un gaz depuis au moins une entrée vers au moins une sortie. De manière alternative, le circuit microfluidique est compris dans un élément et de préférence est creusé dans au moins une partie dudit élément de manière à former une cavité correspondante au circuit microfluidique.

Par « puissance inférieure à 100 watts » il est entendu une puissance électrique inférieure à 100 watts, c'est-à-dire une puissance électrique nominale sous condition de fonctionnement inférieure à 100 watts.

Le circuit microfluidique et le moyen chauffage sont adaptés pour chauffer le moyen d'adsorption à une température comprise entre 120 et 350°C, de préférence entre 150 et 250°C, de manière à désorber les polluants gazeux de l'échantillon gazeux qui ont été préalablement adsorbés par le moyen d'adsorption.

Le moyen de chauffage de la présente invention peut comprendre des résistances chauffantes en métal ou en céramique. Préférentiellement, les résistances chauffantes ont une valeur de résistance comprise entre 2 et 25 ohms, encore plus préférentiellement entre 5 et 20 ohms.

Avantageusement, le moyen de chauffage comprend au moins un élément chauffant en céramique. Un tel moyen de chauffage en céramique est adapté à la présente invention car les céramiques sont des matériaux conservant leur solidité à des températures très élevées et résistants aux chocs thermiques. De plus, de tels moyens de chauffage utilisent peu d'énergie pour chauffer. Les moyens de chauffage en céramique permettent particulièrement un chauffage constant et uniforme jusqu'à des températures de l'ordre de 600°C.

Par « céramique » il est entendu céramique technique. Par « un élément chauffant en céramique », il est entendu un élément chauffant comprenant de la céramique ou dont le revêtement est en céramique.

Le moyen d'adsorption des polluants gazeux correspond généralement, mais sans limiter l'invention, à un adsorbant chimique poreux choisi en fonction du ou des polluants gazeux ciblés dont l'adsorption, la désorption puis l'analyse sont souhaitées. Un adsorbant chimique est un solide qui permet de fixer des adsorbats (e. g. des atomes, des ions ou des molécules) en phase gazeuse ou liquide *via* un phénomène de surface tel que des interactions de Van der Waals, des interactions dipolaires ou des liaisons chimiques covalentes et ioniques.

Selon l'invention telle que revendiquée, le moyen de chauffage est au moins fixé sur une première face du circuit microfluidique ou de l'élément comprenant le circuit microfluidique. De préférence, le moyen de chauffage est au moins fixé sur une première face du circuit microfluidique et au plus proche du moyen d'adsorption. Une telle disposition du moyen de chauffage permet un chauffage rapide du moyen d'adsorption par conduction thermique et permet d'éviter toute déperdition thermique. Notamment, l'épaisseur de l'élément comprenant le circuit microfluidique est la plus fine possible, permettant de réduire le temps nécessaire au chauffage du moyen d'adsorption. Le moyen de chauffage est préférentiellement fixé au circuit microfluidique ou bien fixé à l'élément comprenant le circuit microfluidique. Dans un mode de réalisation particulier, une pâte thermique ou une graisse thermique est ajoutée entre le moyen de chauffage et le circuit microfluidique. Cette pâte thermique permet d'améliorer la transmission de chaleur depuis le moyen de chauffage vers le circuit microfluidique.

Préférentiellement, le moyen de chauffage est au moins fixé sur une première face du circuit microfluidique ou de l'élément comprenant le circuit microfluidique et sur une seconde face du circuit microfluidique opposée à la première face du circuit microfluidique, ou bien sur une seconde face de l'élément comprenant le circuit microfluidique. Une telle disposition du moyen de chauffage permet un chauffage homogène du pré-concentrateur microfluidique et plus spécifiquement du moyen d'adsorption des polluants gazeux.

Préférentiellement, le pré-concentrateur microfluidique comprend également un moyen de retenue du moyen d'adsorption à l'intérieur du circuit microfluidique, le moyen de retenue étant adapté pour être poreux à un gaz, résistant en température et inerte chimiquement. La présence d'un moyen de retenue du moyen d'adsorption permet au moyen d'adsorption de ne pas pouvoir être déplacé durant l'utilisation du pré-concentrateur microfluidique.

Préférentiellement, le circuit microfluidique est adapté pour recevoir un débit gazeux entre 0,1 et 100 mL/min, préférentiellement entre 1 et 50 mL/min, encore plus préférentiellement entre 5 et 20 mL/min. Le débit gazeux peut être assuré par une pompe qui peut être couplé à un moyen de régulation du débit comme un régulateur de débit massique ou une électrovanne proportionnelle ou un restricteur.

Préférentiellement, le moyen d'adsorption est adapté pour concentrer des composés organiques volatils ciblés, comme par exemple le benzène, le toluène, l'éthylbenzène et les xylènes. Alternativement, le moyen d'adsorption est adapté pour concentrer des composés inorganiques tels que les oxydes d'azote ou l'ammoniac.

Selon une première alternative de l'invention telle que revendiquée, l'élément dans lequel est creusé le circuit microfluidique ou le circuit microfluidique est en cuivre, en acier, en aluminium, en inox ou en un alliage de métaux, le circuit microfluidique étant de préférence en aluminium. De tels métaux ou alliages de métaux permettent la conduction thermique vers le moyen d'adsorption en minimisant les pertes thermiques. Ainsi, le chauffage ou le refroidissement du circuit microfluidique en métal permettra de chauffer ou de refroidir le moyen d'adsorption. Des métaux tels que le cuivre, l'acier, l'aluminium, l'inox ou un alliage de métaux sont particulièrement intéressants pour la présente invention car ils permettent l'obtention d'un circuit microfluidique ou un élément dans lequel est creusé le circuit microfluidique dont la forme est particulièrement adaptée à un chauffage par un moyen de chauffage placé sur une ou plusieurs faces du circuit microfluidique. En effet, il est possible avec de tels métaux d'obtenir une ou plusieurs surfaces planes sur lesquelles un ou plusieurs moyens de chauffage pourront être fixés afin de conduire la chaleur d'une manière optimale vers le moyen d'adsorption. Egalement, de tels matériaux permettent d'améliorer la robustesse du circuit microfluidique et donc du pré-concentrateur microfluidique. Encore plus préférentiellement, le circuit microfluidique ou l'élément comprenant le circuit microfluidique est en aluminium. L'aluminium est particulièrement préféré pour ses capacités de conduction thermique, pour sa facilité de micro-fraisage pour creuser la cavité microfluidique et pour son poids.

Selon une seconde alternative de l'invention telle que revendiquée, le circuit microfluidique peut être en un polymère conducteur, notamment comprenant du carbone ou des métaux. Par exemple, le circuit microfluidique peut être en fluorure de vinylidène, en acide polylactique ou en un polymère styrénique tel que l'acrylonitrile butadiène styrène. Particulièrement, ces polymères conducteurs peuvent comprendre des nanotubes de carbone. De tels polymères permettent l'obtention d'un circuit microfluidique ou un élément dans lequel est creusé le circuit microfluidique dont la forme est particulièrement adaptée à un chauffage par un moyen de chauffage placé sur une ou plusieurs faces du circuit microfluidique. En effet, il est possible avec de tels métaux d'obtenir une ou plusieurs surfaces planes sur lesquelles un ou plusieurs moyens de chauffage pourront être fixés afin de conduire la chaleur vers le moyen d'adsorption. Egalement, de tels matériaux permettent d'améliorer la robustesse du circuit microfluidique et donc du pré-concentrateur microfluidique.

Préférentiellement, l'élément dans lequel est creusé le circuit microfluidique ou le circuit microfluidique de la présente invention a essentiellement une forme géométrique de parallélépipède rectangle. Une telle forme peut être obtenue avec des métaux tels que le cuivre, l'acier, l'aluminium, l'inox ou un alliage de métaux, avec du verre ou bien avec un polymère. Par « parallélépipède rectangle », il est entendu une figure solide délimitée par six faces rectangulaires dont tous les angles sont des angles droits et les faces opposées du parallélépipède sont égales. Une telle forme géométrique présente des surfaces sur lesquelles un ou plusieurs moyens de chauffage peuvent être facilement fixés. Une telle forme géométrique ne peut être obtenue avec un circuit microfluidique en silicium.

La présente invention divulgue également un ensemble comprenant une enceinte ; un pré-concentrateur microfluidique tel que décrit précédemment ; au moins un premier connecteur adapté pour recevoir un gaz depuis l'extérieur de l'enceinte et le transférer vers l'au moins une entrée du circuit microfluidique et au moins un second connecteur adapté pour recevoir un gaz depuis la sortie du circuit microfluidique et transférer un gaz vers l'extérieur de l'enceinte ; et un moyen de maintien du pré-concentrateur microfluidique à l'intérieur de l'enceinte.

Préférentiellement, l'ensemble comprend également au moins un moyen de refroidissement adapté pour refroidir le pré-concentrateur microfluidique, préférentiellement jusqu'à la température ambiante. De préférence, l'ensemble comprend au moins un ventilateur comme moyen de refroidissement. Également, l'ensemble peut comprendre au moins un ventilateur et une enceinte comprenant au moins deux ouvertures, l'ensemble étant adapté pour faire circuler un gaz de refroidissement, par exemple l'air ambiant depuis l'extérieur de l'enceinte vers l'intérieur de l'enceinte et pour faire circuler ce gaz de refroidissement depuis l'intérieur de l'enceinte vers l'extérieur de l'enceinte.

Notamment, la forme géométrique de parallélépipède rectangle du circuit microfluidique est particulièrement adaptée pour que le circuit microfluidique soit refroidi par un gaz de refroidissement circulant dans l'intérieur de l'enceinte car un tel circuit microfluidique comprend des surfaces planes augmentant la surface d'échange.

Avantageusement, le moyen de maintien du pré-concentrateur microfluidique comprend un matériau parmi les métaux, le verre ou les polymères ou une combinaison d'au moins deux de ces matériaux. Le moyen de maintien de l'ensemble est particulièrement adapté pour maintenir le pré-concentrateur microfluidique au centre de l'enceinte de telle manière que le pré-concentrateur microfluidique ait le minimum de contact avec les autres éléments de l'enceinte. Le pré-concentrateur microfluidique est ainsi maintenu au maximum au contact du gaz présent dans l'enceinte, par exemple l'air ambiant, dans l'enceinte.

De manière avantageuse, le premier connecteur et le second connecteur sont constitués de matériaux qui sont résistants aux variations de température. De manière complémentaire ou alternative, le premier connecteur et le second connecteur sont constitués de matériaux inertes chimiquement, c'est-à-dire qui n'émettent pas de réactifs et adsorbent peu les réactifs. Préférentiellement, le premier connecteur et/ou le second connecteur peuvent comprendre ou consister en des férules. De manière préférentielle, le premier connecteur et le second connecteur sont constitués de polymère, particulièrement de Téflon (PTFE) ou de polyétheréthercétone (PEEK). Le polyétheréthercétone est un matériau avantageux pour la présente invention car il est résistant aux variations de température, est inerte chimiquement et a une faible conductivité thermique. Le premier connecteur et le second connecteur peuvent comprendre chacun des férules, ces férules étant constituées de Téflon (PTFE) ou de polyétheréthercétone (PEEK).

Les ensembles décrits précédemment peuvent être alimentés par un branchement sur secteur.

Avantageusement, les connecteurs sont cylindriques et sont raccordés au réseau de tubes, tubulures, ou micro-tubulures du circuit microfluidique, permettant notamment d'empêcher les fuites.

La présente invention divulgue également un ensemble tel que ceux décrits précédemment, l'ensemble comprenant en outre une batterie adaptée pour alimenter au moins le moyen de chauffage du pré-concentrateur microfluidique. Un tel ensemble comprenant une batterie est autonome et ne nécessite pas d'être connecté en continu à une source d'alimentation pour son utilisation en association avec un dispositif d'analyse de polluants gazeux.

La présente invention divulgue également un système comprenant un ensemble tel que ceux décrits précédemment ; et un dispositif d'analyse adapté pour recevoir et analyser des polluants gazeux provenant dudit ensemble.

Le pré-concentrateur microfluidique de la présente invention est particulièrement adapté pour mettre en oeuvre des cycles d'adsorption, désorption et transfert vers un dispositif d'analyse d'une manière plus rapide que celle des dispositifs de l'art antérieur, en particulier si ces dispositifs de l'art antérieur sont alimentés en très basse tension. Le moyen de chauffage en céramique permet un chauffage rapide du pré-concentrateur tout en fonctionnant à très basse tension, c'est-à-dire inférieure à 50 volts, de préférence moins de 25 volts.

La production du pré-concentrateur microfluidique de la présente invention ne nécessite pas d'installations particulières telles qu'une salle blanche, ce qui permet de réduire son coût.

L'homme du métier saura adapter l'adsorbant en fonction des polluants gazeux ciblés. Également, l'homme du métier saura adapter le moyen de retenue en fonction du moyen d'adsorption et le matériau du circuit microfluidique ou de l'élément comprenant le circuit microfluidique en fonction du moyen d'adsorption. Également, l'homme du métier saura adapter le moyen de chauffage et sa puissance en fonction du moyen d'adsorption et de la température à atteindre pour désorber du moyen d'adsorption les polluants gazeux ciblés.

### Brève description des figures

D'autres caractéristiques, détails et avantages de l'invention ressortiront à la lecture de la description faite en référence aux dessins annexés donnés à titre d'exemple et qui représentent, respectivement :
[Fig.1] La figure 1 illustre une configuration de circuit microfluidique étant une configuration carrée ;
[Fig.2] La figure 2 illustre une configuration de circuit microfluidique étant une configuration en forme de serpentin ;
[Fig.3] La figure 3 illustre un pré-concentrateur microfluidique sur lequel sont fixés un premier connecteur et un second connecteur ;
[Fig.4] La figure 4 illustre un ensemble comprenant une enceinte comprenant un pré-concentrateur microfluidique ;
[Fig.5] La figure 5 illustre un ensemble comprenant une enceinte en vue éclatée comprenant un pré-concentrateur microfluidique.

### Description détaillée de l'invention

Le moyen de chauffage de la présente invention est adapté pour fonctionner à de très basses tensions, c'est-à-dire inférieures à 50 volts. De préférence, le pré-concentrateur microfluidique de la présente invention est particulièrement adapté pour fonctionner à des tensions inférieures à 25 volts, encore plus préférentiellement des tensions inférieures ou égales à 15 volts. De manière coïncidente, le pré-concentrateur microfluidique de la présente invention est adapté pour fonctionner à des intensités de courant inférieures ou égales à 4 ampères, de préférence inférieure ou égales à 3 ampères. Il est entendu que les valeurs de tensions et d'intensité de courant indiquées sont des valeurs nominales. Notamment, l'intensité du courant décroît lorsque la température augmente.

Dans certains modes de réalisation, le circuit microfluidique peut être compris dans un élément, l'élément comprenant au moins une première pièce dans laquelle le circuit microfluidique est creusé sur une face supérieure de ladite première pièce et au moins une seconde pièce qui est apposée et fixée sur ladite face supérieure de la première pièce de manière à ce que le circuit microfluidique soit à l'intérieur de l'élément formé par la première pièce et la seconde pièce. Un élément comprenant deux pièces est particulièrement intéressant pour pouvoir accéder au moyen d'adsorption en séparant les pièces, permettant de recycler, c'est-à-dire réutiliser, le pré-concentrateur microfluidique en changeant le moyen d'adsorption et/ou les moyens de retenue. Ainsi, un unique circuit microfluidique permettra la concentration de différents polluants gazeux de plusieurs échantillons gazeux. De préférence, toutes les pièces du circuit microfluidique sont constituées du même matériau afin d'obtenir un transfert de chaleur homogène dans le circuit microfluidique.

Alternativement, l'élément comprenant le circuit microfluidique est constitué d'une unique pièce.

Le moyen d'adsorption peut comprendre un adsorbant chimique tel que, mais sans limiter l'invention à ces adsorbants, du noir de carbone graphité (« graphitized carbon black » en langue anglaise), des composés constitués d'ions métalliques et de ligands organiques (« metal-organic framework » en langue anglaise), des silices mésoporeuses, des composés zéolites ou des combinaisons d'au moins deux de ces adsorbants. L'homme du métier saura adapter la composition du moyen d'adsorption en fonction des polluants gazeux ciblés.

Dans certains modes de réalisation, le moyen de retenue du moyen d'adsorption est disposé d'une part entre l'au moins une entrée du circuit microfluidique et le moyen d'adsorption et d'autre part entre le moyen d'adsorption et l'au moins une sortie du circuit microfluidique. Le moyen de retenue est choisi de manière à ce qu'il ne puisse pas retenir de polluants gazeux malgré l'augmentation de température (désorption) et qu'il réduise le moins possible l'écoulement du gaz au travers du circuit microfluidique. Le moyen de retenue peut par exemple comprendre de la laine de verre, du quartz, du métal fritté, du verre, de la céramique.

Dans certains modes de réalisation particuliers, le moyen de retenue est adapté de manière à diriger l'écoulement du gaz d'une manière particulière adaptée pour homogénéiser l'écoulement dans le circuit microfluidique et plus spécifiquement dans le moyen d'adsorption.

Dans certains modes de réalisation, l'enceinte est adaptée pour permettre une circulation d'un gaz de refroidissement, par exemple l'air ambiant, au travers de l'enceinte par l'intermédiaire d'au moins deux ouvertures dans l'enceinte. Les ouvertures dans l'enceinte sont particulièrement adaptées pour permettre la circulation d'air au plus proche du circuit microfluidique ou de l'élément comprenant le circuit microfluidique. La circulation d'air dans l'enceinte permet de réduire la température de l'enceinte et des éléments présents dans l'enceinte après un chauffage. Notamment, la circulation d'air permet de réduire la température du circuit microfluidique et ainsi du moyen d'adsorption. Également, le moyen de refroidissement, lorsqu'il comprend au moins un ventilateur, est particulièrement adapté pour favoriser la circulation d'air dans l'enceinte. Lorsque l'ensemble comprend des ouvertures dans l'enceinte et au moins un ventilateur, les ouvertures et l'au moins un ventilateur sont particulièrement adaptés pour permettre la circulation d'air au travers de l'enceinte de manière à refroidir l'enceinte, les éléments dans l'enceinte et particulièrement le circuit microfluidique et le moyen d'adsorption. Le moyen de refroidissement permet de favoriser la convection thermique des éléments.

Lors d'un cycle de fonctionnement du pré-concentrateur microfluidique, le moyen d'adsorption fixe les polluants gazeux d'un échantillon gazeux par son passage dans le circuit microfluidique. Lors de la phase de désorption, le moyen de chauffage chauffe le moyen d'adsorption de manière à désorber les polluants gazeux afin de transférer les polluants gazeux vers un dispositif d'analyse. Après la désorption et pendant le refroidissement jusqu'à la température ambiante, l'air dans l'enceinte est renouvelé rapidement par le moyen de refroidissement, par exemple au moins un ventilateur qui permet la circulation d'air.

Dans certains modes de réalisation, l'enceinte est en un matériau choisi parmi les métaux, le verre ou les polymères ou une combinaison d'au moins deux de ces matériaux. De préférence, l'enceinte est constituée de matériaux comprenant des polymères. De manière particulière, l'enceinte est au moins partiellement en polyétheréthercétone.

Dans certains modes de réalisation, le moyen de maintien peut comprendre des ressorts avec des couches isolantes au niveau de l'extrémité en contact avec le pré-concentrateur microfluidique de manière à limiter les transferts de chaleurs inappropriés. Les ressorts sont particulièrement adaptés car ils permettent un maintien du pré-concentrateur microfluidique par une surface de contact faible. En particulier les ressorts du moyen de maintien sont fixés par une première extrémité à l'enceinte et par une seconde extrémité opposée à la première au moyen de chauffage. Le moyen de maintien peut également comprendre des vis fines étant fixées par une première extrémité au pré-concentrateur microfluidique et fixées par une seconde extrémité opposée à la première extrémité à l'enceinte.

Préférentiellement, lesdits au moins premiers et seconds connecteurs de l'ensemble sont adaptés pour éviter les déperditions de chaleurs. De tels premiers et seconds connecteurs permettent le transfert du mélange gazeux en amont et en aval du pré-concentrateur.

De préférence, l'au moins un premier connecteur et l'au moins un second connecteur est en polyétheréthercétone en raison de la résistance en température de ce matériau, son inertie chimique et sa faible conductivité thermique. De préférence, l'ensemble comprend des férules assurant l'étanchéité des connecteurs sur la partie liée au pré-concentrateur microfluidique et sont en polyétheréthercétone, le reste du connecteur pouvant être réalisé dans un autre matériau à savoir un métal ou un polymère.

Le pré-concentrateur microfluidique de la présente invention est particulièrement léger. En particulier, le circuit microfluidique, le moyen d'adsorption et le moyen de retenue du pré-concentrateur microfluidique de la présente invention pèsent un poids total inférieur à 5 grammes pour une taille d'environ ou inférieure à 4x15x30 mm³. Le moyen de chauffage en céramique est également particulièrement adapté en raison de son poids qui est de l'ordre de quelques grammes pour des tailles d'environ ou inférieures à 1x10x10 mm³. Un tel poids permet de manière synergique de réduire le temps nécessaire pour chauffer ou refroidir le circuit microfluidique et plus particulièrement le moyen d'adsorption afin de désorber les polluants gazeux.

La taille du pré-concentrateur microfluidique de la présente invention permet également d'utiliser une quantité d'adsorbant de 1 à 40 mg, préférentiellement de 2 à 20 mg, encore plus préférentiellement de 2 à 10 mg. Ainsi, la quantité d'adsorbant nécessaire à la mise en oeuvre des pré-concentrateurs microfluidiques de la présente invention est inférieure à celle des pré-concentrateurs microfluidiques standard de l'art antérieur.

Dans certains modes de réalisation particuliers, le moyen d'adsorption comprend au moins deux adsorbants différents ou non séparés par au moins un élément séparateur. Les éléments séparateurs sont adaptés pour être poreux à un gaz, résistant en température et inerte chimiquement. Les éléments séparateurs peuvent être identiques aux moyens de retenue. Un moyen d'adsorption comprenant plusieurs adsorbants différents permet la fixation de plusieurs polluants gazeux à la fois, permettant de mettre en oeuvre un seul cycle d'adsorption, désorption et transfert d'un échantillon gazeux pour l'analyse de plusieurs polluants gazeux. De manière alternative, le moyen d'adsorption comprend plusieurs adsorbants n'étant pas séparés par des éléments séparateurs. Ainsi, des couches successives d'adsorbants de tailles similaires ou non peuvent être disposées pour constituer le moyen d'adsorption.

Dans un mode de réalisation particulier, le moyen de retenue peut être un adsorbant. Dans un tel cas, le moyen de retenue et le moyen d'adsorption sont confondus. Par exemple, l'adsorbant peut comprendre des nanotubes de carbone et être également un moyen de retenue.

Les connecteurs de la présente invention peuvent correspondre à des raccords limitant les fuites de fluide et ayant une haute résistance, tels que des produits Swagelok.

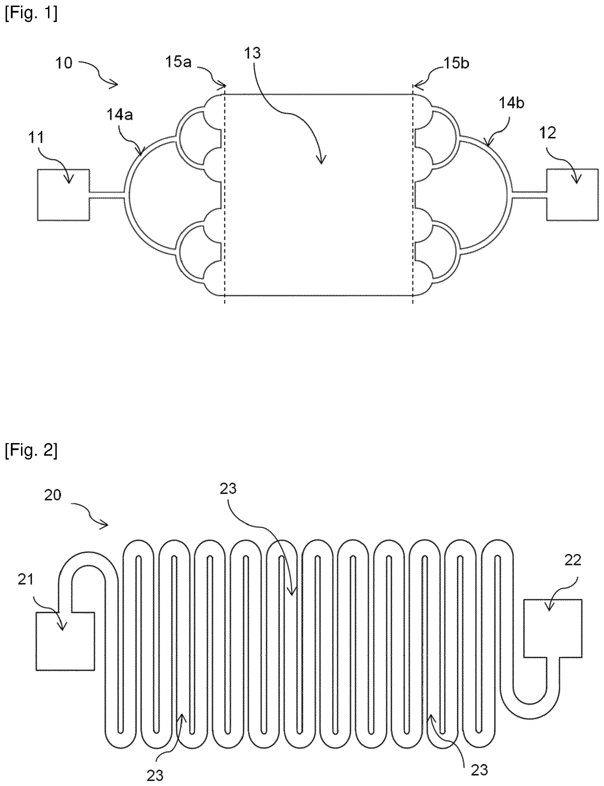

Le circuit microfluidique du pré-concentrateur peut avoir différentes configurations telles que par exemple, une configuration carrée, cylindrique ou en forme de serpentin. Les configurations carrées et en forme de serpentin sont particulièrement présentées dans les figures 1 et 2. L'homme du métier saura adapter la configuration en fonction des polluants gazeux ciblés et du moyen d'adsorption utilisé.

Les différents modes de réalisation présentés précédemment ne sont pas limitatifs et peuvent être combinés entre eux. En outre, la présente invention n'est pas limitée aux deux configurations des figures 1 et 2 et aux modes de réalisation précédemment décrits.

La figure 1 illustre une première configuration de circuit microfluidique étant une configuration carrée 10 dans laquelle peut circuler un gaz. La configuration carrée 10 comprend une entrée 11 du circuit microfluidique et une sortie 12 du circuit microfluidique. Une telle configuration carrée comprend également une zone carrée 13 où est disposé le moyen d'adsorption. Entre la zone carrée 13 et l'entrée 11 du circuit microfluidique sont disposés des tubes ou tubulures en réseau 14a permettant la circulation du gaz de l'entrée 11 vers la zone carrée 13. De manière similaire, entre la zone carrée 13 et la sortie 12 du circuit microfluidique sont disposés des tubes ou tubulures 14b permettant la circulation du gaz de la zone carrée 13 vers la sortie 12 du circuit microfluidique. Optionnellement, le circuit microfluidique ayant une configuration carrée comprend des moyens de retenue (non représentés) du moyen d'adsorption qui sont positionnés, lors d'une configuration carrée du circuit microfluidique, sur les côtés 15a et 15b de la zone carrée 13, les côtés 15a et 15b étant représentés selon une ligne en pointillés.

Dans un mode particulier de réalisation (non représenté) qui peut être combiné avec les autres modes de réalisation, le moyen de retenue est disposé dans le circuit microfluidique de manière à diviser le flux de gaz de l'échantillon gazeux afin qu'il soit diffusé de manière homogène vers le moyen d'adsorption.

La figure 2 illustre une seconde configuration de circuit microfluidique étant une configuration en forme de serpentin 20 dans laquelle peut circuler un gaz. Cette configuration comprend une entrée 21 du circuit microfluidique et une sortie 22 du circuit microfluidique. Une telle configuration en forme de serpentin comprend également une zone 23 constituée d'un unique tube reliant l'entrée 21 à la sortie 22 du circuit microfluidique. Le tube de la zone 23 présente des méandres dans lesquelles est disposé le moyen d'adsorption. Optionnellement, le circuit microfluidique ayant une configuration en forme de serpentin comprend des moyens de retenue (non représentés) du moyen d'adsorption.

Les configurations des figures 1 et 2 peuvent être combinées avec les différents modes de réalisation présentés. D'autres configurations peuvent convenir à la mise en oeuvre de l'invention et les configurations des figures 1 et 2 ne sont pas limitatives.

Dans un exemple particulier de réalisation, le circuit microfluidique comprend un cylindre rectiligne et creux constituant une première pièce dans laquelle est placé le moyen d'adsorption, la première pièce étant par exemple en aluminium. Une seconde pièce, par exemple en aluminium et d'une taille de 3x15x30 mm³, entoure cette première pièce et est disposée de manière à ce que le cylindre rectiligne et creux s'étende sur les côtés de la seconde pièce. Dans ce premier mode de réalisation, le moyen de chauffage d'une puissance inférieure ou égale à 50 watts est composé de deux résistances en céramique de 5 ou 10 ohms d'une taille de 10×10×1 mm³ qui sont disposées sur la seconde pièce, une sur une première face de la seconde pièce et une sur une seconde face de la seconde pièce, opposée à la première face. Dans ce premier mode de réalisation particulier, le diamètre de l'intérieur du cylindre rectiligne et creux est de 1,65 mm. 5 mg d'adsorbant est disposé à l'intérieur de la première pièce et est maintenu par de la laine de verre de part et d'autre de l'adsorbant dans la première pièce. Un premier connecteur en polyétheréthercétone (PEEK) est disposé à l'entrée de la première pièce et un second connecteur en polyétheréthercétone (PEEK) est disposé à la sortie de la première pièce. Le poids d'un tel circuit microfluidique est d'environ 2 g. Un tel pré-concentrateur microfluidique peut atteindre grâce au moyen de chauffage une température de 200°C en une durée d'environ 24 secondes avec une tension de 14 volts et une intensité de 3,15 ampères.

Un ensemble comprenant l'exemple particulier de réalisation précédemment décrit peut être par exemple mis en oeuvre pour effectuer plusieurs cycles d'adsorption, désorption et transfert en 8 minutes, comprenant 4 minutes de temps total d'adsorption des polluants gazeux de l'échantillon gazeux et 4 minutes de temps total de cycle de chauffage/refroidissement.

Dans certains modes de réalisation, le moyen de chauffage est disposé sur l'intégralité d'au moins une face du circuit microfluidique.

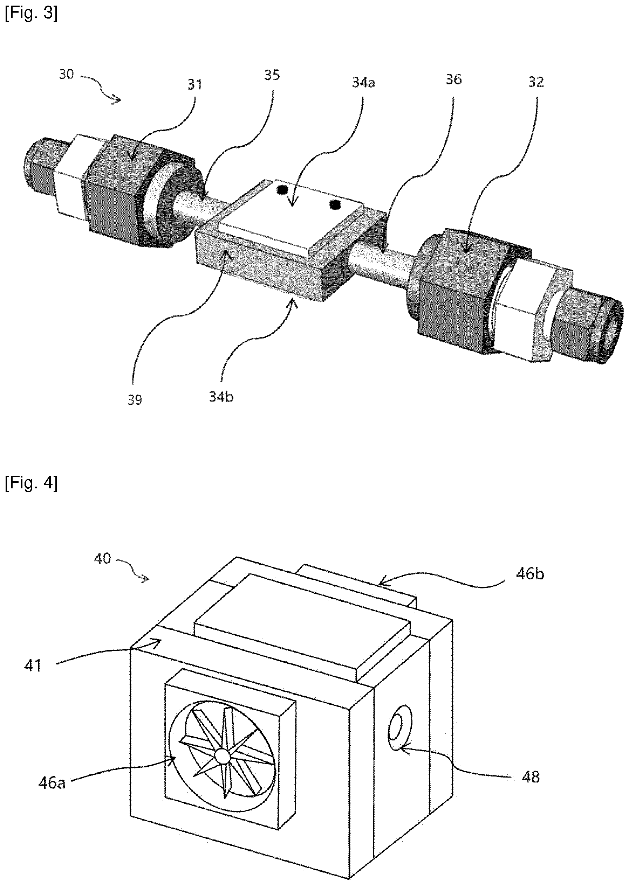

La figure 3 illustre un pré-concentrateur microfluidique 30 comprenant un circuit microfluidique 39 sur lequel sont fixés un premier connecteur 31 et un second connecteur 32. Le moyen de chauffage du pré-concentrateur microfluidique 30 comprend deux résistances en céramique 34a et 34b qui permettent de chauffer le circuit microfluidique 39. La résistance en céramique 34b est disposée sur une face du circuit microfluidique opposée à la face sur laquelle est disposée la résistance en céramique 34a. La résistance en céramique 34b est similaire à la résistance en céramique 34a. Le premier connecteur 31, préférentiellement en polyétheréthercétone, est connecté à l'entrée du circuit microfluidique par une première extrémité à une entrée 35 du circuit microfluidique 39. La seconde extrémité du premier connecteur 31 est adaptée pour recevoir un échantillon gazeux. Le second connecteur 32 comprend une première extrémité connectée à l'au moins une sortie 36 du circuit microfluidique 39 et permet le transfert d'un gaz depuis ladite sortie 36 vers une seconde extrémité du second connecteur qui est adaptée pour transmettre un gaz à un dispositif d'analyse.

Le pré-concentrateur microfluidique 30 a essentiellement une forme géométrique de parallélépipède rectangle.

La figure 4 illustre un ensemble 40 comprenant une enceinte 41, un pré-concentrateur microfluidique à l'intérieur de l'enceinte (non visible), un moyen de maintien (non visible) et un moyen de refroidissement. L'enceinte 41, le moyen de maintien, le premier et le second connecteur permettent de maintenir le pré-concentrateur microfluidique à l'intérieur de l'enceinte tout en limitant les contacts physiques entre le pré-concentrateur microfluidique et les autres éléments. De manière analogue, l'ensemble 40 est adapté de manière à ce que le pré-concentrateur microfluidique soit en contact maximal avec l'air ambiant dans l'enceinte. Le moyen de refroidissement est composé d'un premier ventilateur 46a et d'un second ventilateur 46b permettant la circulation d'air à l'intérieur de l'enceinte 41. Les premier et second ventilateurs 46a, 46b permettent la circulation de l'air depuis l'extérieur de l'enceinte et au travers de celle-ci, de manière à diminuer la température de l'enceinte 41 et des éléments dans l'enceinte 41, particulièrement de manière à diminuer la température du pré-concentrateur microfluidique (non-visible) pendant le fonctionnement des ventilateurs.

L'ensemble 40 de la figure 4 comprend une première ouverture 48 adaptée pour permettre la connexion entre le pré-concentrateur microfluidique et un dispositif d'analyse afin de pouvoir transférer un gaz comprenant des polluants gazeux désorbés audit dispositif d'analyse. De manière similaire, une seconde ouverture (non visible), sur une face de l'enceinte opposée à la face de l'enceinte comprenant l'ouverture 48, est adaptée pour permettre la connexion entre le pré-concentrateur microfluidique et un dispositif, par exemple un dispositif pour injecter un gaz.

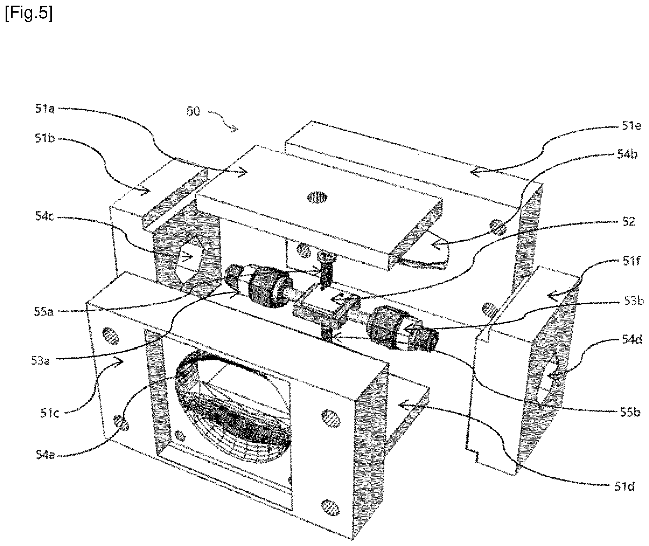

La figure 5 illustre un second ensemble 50 comprenant une enceinte similaire à celle décrite en figure 4 mais cette fois-ci avec une vue éclatée comprenant plusieurs parties 51a, 51b, 51c, 51d, 51e, 51f, un pré-concentrateur microfluidique 52 à l'intérieur de l'enceinte, le pré-concentrateur microfluidique 52 étant connecté à deux connecteurs 53a, 53b. L'enceinte comprend deux ouvertures 54a, 54b adaptées pour le passage d'air et pour accueillir deux ventilateurs, et deux ouvertures 54c, 54d adaptées respectivement pour le passage du premier connecteur 53a et du second connecteur 53b. L'enceinte peut comprendre un moyen de maintien du pré-concentrateur microfluidique comprenant deux vis 55a, 55b permettant de maintenir le pré-concentrateur microfluidique 52 dans l'enceinte. En particulier, le moyen de maintien permet de maintenir le moyen de chauffage contre le circuit microfluidique. L'enceinte est fermée lors de l'utilisation de l'ensemble 50.

Dans un mode de réalisation particulier de l'invention, le pré-concentrateur microfluidique comprend une batterie permettant l'alimentation du moyen de chauffage. Le pré-concentrateur est autonome et est portable, ne nécessitant pas d'être connecté à une source d'alimentation par secteur pour son utilisation avec une enceinte telle que précédemment décrite et/ou un dispositif d'analyse.

Dans un mode de réalisation particulier de l'invention, l'enceinte comprend une batterie permettant l'alimentation au moins du moyen de refroidissement. L'ensemble comprenant une batterie est autonome et est portable, ne nécessitant pas d'être connecté à une source d'alimentation par secteur pour son utilisation avec un dispositif d'analyse.

Dans un mode de réalisation particulier, un pré-concentrateur microfluidique tel que décrit précédemment comprend des capteurs de température. De tels capteurs de température peuvent être fixés au circuit microfluidique ou à l'élément comprenant le circuit microfluidique. En particulier, les capteurs de température peuvent être intégrés dans l'élément comprenant le circuit microfluidique et de préférence au plus proche du moyen d'adsorption. De tels capteurs permettent de mesurer la température du capteur microfluidique et notamment de déterminer la température du moyen d'adsorption et ainsi d'apprécier le besoin ou non de modification de la température lors d'une étape de chauffage du circuit microfluidique ou bien lors d'une étape de refroidissement du circuit microfluidique afin de déterminer quand un nouveau cycle d'adsorption peut être débuté. Le moyen de chauffage peut être asservi à un régulateur qui adapte l'alimentation du moyen de chauffage en fonction de la température captée par les capteurs de température.

Également, l'enceinte telle que décrite précédemment peut comprendre des capteurs de température afin de mesurer la température à l'intérieur et/ou à l'extérieur de l'enceinte.

L'ensemble 40 est configuré pour la mise en oeuvre d'un procédé de concentration de polluants gazeux et d'injection dans un dispositif d'analyse adapté pour recevoir des polluants gazeux comprenant :
- la fourniture d'un gaz comprenant des polluants gazeux à l'au moins une entrée (non représentée) du circuit microfluidique du pré-concentrateur microfluidique 42 par l'intermédiaire d'un premier connecteur;
- l'adsorption de polluants gazeux dans le moyen d'adsorption (non représenté) du pré-concentrateur microfluidique 42 ;
- la désorption de polluants gazeux adsorbés dans le moyen d'adsorption du pré-concentrateur microfluidique 42 ; et,
- le transfert desdits polluants gazeux depuis l'au moins une sortie du circuit microfluidique du pré-concentrateur microfluidique 42 vers un dispositif d'analyse (non représenté) adapté pour recevoir des polluants gazeux, par l'intermédiaire d'un second connecteur.

Notamment, les ensembles de la présente invention permettent une désorption de polluants gazeux par chauffage du moyen d'adsorption à une température comprise entre 120 et 350°C, de préférence entre 150 et 250°C en une durée comprise entre 5 et 30 secondes. Préférentiellement, une fois la température maximale atteinte, cette température est maintenue pendant un certain temps pour assurer la désorption totale des molécules. La durée de maintien de cette température maximale est de l'ordre de 30 à 120 secondes. Également, les ensembles de la présente invention permettent un refroidissement du pré-concentrateur et du moyen d'adsorption à la température ambiante, soit généralement 20°C, en moins de 120 secondes, environ 90 secondes.

Notamment, lorsque le pré-concentrateur microfluidique est en aluminium, il peut être utilisé pour de nombreux cycles d'adsorption, désorption à une température comprise entre 120 et 350°C et transmission de gaz sans être endommagé.

Le pré-concentrateur microfluidique de la présente invention peut être placé au sein d'une boucle d'injection à six voies pour son intégration dans un chromatographe en phase gazeuse.

Les différents modes de réalisation présentés dans cette description ne sont pas limitatifs et peuvent être combinés entre eux. En outre, la présente invention n'est pas limitée aux modes de réalisation précédemment décrits mais s'étend à tout mode de réalisation entrant dans la portée des revendications.

## Revendications

1. Pré-concentrateur microfluidique (30) adapté pour recevoir un échantillon gazeux comprenant des polluants gazeux, concentrer les polluants gazeux et les transférer vers un dispositif d'analyse, le pré-concentrateur microfluidique comprenant :
- un circuit microfluidique (39) permettant la circulation d'un gaz pur ou comprenant des polluants gazeux et comprenant au moins une entrée (35) adaptée pour recevoir ledit gaz et au moins une sortie (36) adaptée pour transférer ledit gaz vers un dispositif d'analyse,
- un moyen d'adsorption des polluants gazeux à l'intérieur du circuit microfluidique (39) entre l'au moins une entrée (35) et l'au moins une sortie (36) du circuit microfluidique, et
- un moyen de chauffage (34a, 34b) d'une puissance inférieure ou égale à 100 watts, de préférence inférieure ou égale à 50 watts,
le circuit microfluidique (39) et le moyen de chauffage (34a, 34b) étant adaptés pour chauffer le moyen d'adsorption à une température comprise entre 120 et 350°C, de préférence de 150 à 250°C,
le circuit microfluidique (39) étant
- en un polymère conducteur, ou
- en cuivre, en acier, en aluminium, en inox ou en un alliage de métaux, le moyen de chauffage (34a, 34b) étant au moins fixé sur une première face du circuit microfluidique (39).

2. Le pré-concentrateur microfluidique (30) selon la revendication 1, le moyen de chauffage (34a, 34b) comprenant au moins un élément chauffant en céramique.

3. Le pré-concentrateur microfluidique (30) selon l'une des revendications précédentes, le moyen de chauffage (34a, 34b) étant au moins fixé sur une première face et une seconde face du circuit microfluidique (39) opposée à la première face du circuit microfluidique.

4. Le pré-concentrateur microfluidique (30) selon l'une des revendications précédentes, le pré-concentrateur microfluidique comprenant également un moyen de retenue du moyen d'adsorption à l'intérieur du circuit microfluidique (39), le moyen de retenue étant poreux à un gaz, résistant en température et inerte chimiquement.

5. Le pré-concentrateur microfluidique (30) selon l'une des revendications précédentes, le moyen d'adsorption comprenant un adsorbant chimique parmi le noir de carbone graphité, les composés constitués d'ions métalliques et de ligands organiques, les silices mésoporeuses, les composés zéolites ou des combinaisons d'au moins deux de ces adsorbants chimiques.

6. Le pré-concentrateur microfluidique (30) selon l'une des revendications précédentes, le circuit microfluidique (39) étant en aluminium.

7. Le pré-concentrateur microfluidique (30) selon l'une des revendications précédentes, le circuit microfluidique ayant essentiellement une forme de parallélépipède rectangle.

8. Un ensemble (40, 50) comprenant :
- une enceinte (41, 51a, 51b, 51c, 51d, 51e, 51f);
- un pré-concentrateur microfluidique (52) selon l'une des revendications 1 à 7 ;
- au moins un premier connecteur adapté pour recevoir un gaz depuis l'extérieur de l'enceinte et le transférer vers l'au moins une entrée du circuit microfluidique et au moins un second connecteur adapté pour recevoir un gaz depuis la sortie du circuit microfluidique et transférer un gaz vers l'extérieur de l'enceinte ; et
- un moyen de maintien (55a, 55b) du pré-concentrateur microfluidique à l'intérieur de l'enceinte.

9. L'ensemble (40, 50) selon la revendication 8 comprenant :
- au moins un moyen de refroidissement (46a, 46b) adapté pour refroidir le pré-concentrateur microfluidique (52) jusqu'à la température ambiante, le moyen de refroidissement comprenant de préférence au moins un ventilateur (46a, 46b).

10. L'ensemble selon l'une des revendications 8 ou 9, le moyen de maintien (55a, 55b) comprenant un matériau parmi les métaux, le verre ou les polymères ou une combinaison d'au moins deux de ces matériaux.

11. L'ensemble selon l'une des revendications 8 à 10, lesdits au moins premiers et seconds connecteurs étant en Téflon (PTFE) ou en polyétheréthercétone (PEEK).

12. L'ensemble selon l'une des revendications 8 à 11, l'ensemble comprenant une batterie adaptée pour alimenter au moins le moyen de chauffage du pré-concentrateur microfluidique (52).

13. Système comprenant :
- Un ensemble (40, 50) selon l'une des revendications 8 à 12 ; et
- Un dispositif d'analyse adapté pour recevoir des polluants gazeux.

## Patentansprüche

1. Mikrofluidischer Vorkonzentrator (30), der angepasst ist, um eine gasförmige Probe zu empfangen, die gasförmige Schadstoffe umfasst, um die gasförmigen Schadstoffe zu konzentrieren, und sie zu einer Analysevorrichtung zu übertragen, wobei der mikrofluidische Vorkonzentrator umfasst:
- einen mikrofluidischen Kreislauf (39), der die Zirkulation eines reinen, oder gasförmige Schadstoffe umfassenden Gases ermöglicht, und mindestens einen Eingang (35) umfasst, der angepasst ist, um das Gas zu empfangen, und mindestens einen Ausgang (36), der angepasst ist, um das Gas zu einer Analysevorrichtung zu übertragen,
- ein Adsorptionsmittel für die gasförmigen Schadstoffe im Inneren des mikrofluidischen Kreislaufs (39) zwischen dem mindestens einen Eingang (35) und dem mindestens einen Ausgang (36) des mikrofluidischen Kreislaufs, und
- Heizmittel (34a, 34b) mit einer Leistung kleiner oder gleich 100 Watt, vorzugsweise kleiner oder gleich 50 Watt,
wobei der mikrofluidische Kreislauf (39) und das Heizmittel (34a, 34b) ausgeführt sind, um das Adsorptionsmittel auf eine Temperatur zu erhitzen, die zwischen 120 und 350 °C, vorzugsweise zwischen 150 und 250 °C liegt, wobei der mikrofluidische Kreislauf (39) ist
- aus einem leitfähigen Polymer, oder
- aus Kupfer, aus Stahl, aus Aluminium, aus Edelstahl oder aus einer Metalllegierung,
wobei das Heizmittel (34a, 34b) mindestens an einer ersten Fläche des mikrofluidischen Kreislaufs (39) befestigt ist.

2. Mikrofluidischer Vorkonzentrator (30) nach Anspruch 1, wobei das Heizmittel (34a, 34b) mindestens ein Heizelement aus Keramik umfasst.

3. Mikrofluidischer Vorkonzentrator (30) nach einem der vorstehenden Ansprüche, wobei das Heizmittel (34a, 34b) mindestens an einer ersten Fläche und einer zweiten Fläche des mikrofluidischen Kreislaufs (39), gegenüber der ersten Fläche des mikrofluidischen Kreislaufs befestigt ist.

4. Mikrofluidischer Vorkonzentrator (30) nach einem der vorstehenden Ansprüche, wobei der mikrofluidische Vorkonzentrator auch ein Rückhaltemittel des Adsorptionsmittels im Inneren des mikrofluidischen Kreislaufs (39) umfasst, wobei das Rückhaltemittel für ein Gas porös, temperaturbeständig und chemisch inert ist.

5. Mikrofluidischer Vorkonzentrator (30) nach einem der vorstehenden Ansprüche, wobei das Adsorptionsmittel einen chemischen Adsorber aus graphitiertem Ruß, den Verbindungen bestehend aus Metallionen und organischen Liganden, mesoporösem Siliziumdioxid, Zeolith-Verbindungen oder Kombinationen aus mindestens zwei dieser chemischen Adsorber umfasst.

6. Mikrofluidischer Vorkonzentrator (30) nach einem der vorstehenden Ansprüche, wobei der mikrofluidische Kreislauf (39) aus Aluminium ist.

7. Mikrofluidischer Vorkonzentrator (30) nach einem der vorstehenden Ansprüche, wobei der mikrofluidische Kreislauf im Wesentlichen eine Form eines rechteckigen Quaders aufweist.

8. Einheit (40, 50), umfassend:
- einen abgeschlossenen Bereich (41, 51a, 51b, 51c, 51d, 51e, 51f);
- einen mikrofluidischen Vorkonzentrator (52) nach einem der Ansprüche 1 bis 7;
- mindestens einen Steckverbinder, der angepasst ist, um ein Gas von außerhalb des abgeschlossenen Bereichs zu empfangen, und es zu dem mindestens einen Eingang des mikrofluidischen Kreislaufs zu übertragen, und mindestens einen zweiten Steckverbinder, der angepasst ist, um ein Gas vom Ausgang des mikrofluidischen Kreislaufs zu empfangen, und ein Gas nach außerhalb des abgeschlossenen Bereichs zu übertragen; und
- ein Haltemittel (55a, 55b) des mikrofluidischen Vorkonzentrators im Inneren des abgeschlossenen Bereichs.

9. Einheit (40, 50) nach Anspruch 8, umfassend:
- mindestens ein Kühlmittel (46a, 46b), das angepasst ist, um den mikrofluidischen Vorkonzentrator (52) bis auf die Umgebungstemperatur abzukühlen, wobei das Kühlmittel vorzugsweise mindestens einen Lüfter (46a, 46b) umfasst.

10. Einheit nach einem der Ansprüche 8 oder 9, wobei das Haltemittel (55a, 55b) einen Werkstoff aus Metallen, Glas oder Polymeren oder einer Kombination aus mindestens zwei dieser Werkstoffe umfasst.

11. Einheit nach einem der Ansprüche 8 bis 10, wobei die mindestens ersten und zweiten Steckverbinder aus Teflon (PTFE) oder aus Polyetheretherketon (PEEK) sind.

12. Einheit nach einem der Ansprüche 8 bis 11, wobei die Einheit eine Batterie umfasst, die angepasst ist, um mindestens das Heizmittel des mikrofluidischen Vorkonzentrators (52) zu versorgen.

13. System, umfassend:
- eine Einheit (40, 50) nach einem der Ansprüche 8 bis 12; und
- eine Analysevorrichtung, die angepasst ist, um die gasförmigen Schadstoffe zu empfangen.

## Claims

1. A microfluidic pre-concentrator (30) adapted to receive a gas sample comprising gas pollutants, concentrate the gas pollutants and transfer them to an analysis device, the microfluidic pre-concentrator comprising:
- a microfluidic circuit (39) allowing the circulation of a pure gas or comprising gas pollutants and comprising at least one inlet (35) adapted to receive said gas and at least one outlet (36) adapted to transfer said gas to an analysis device,
- means for adsorbing gas pollutants inside the microfluidic circuit (39) between the at least one inlet (35) and the at least one outlet (36) of the microfluidic circuit, and
- heating means (34a, 34b) with a power less than or equal to 100 watts, preferably less than or equal to 50 watts,
the microfluidic circuit (39) and the heating means (34a, 34b) being adapted to heat the adsorption means to a temperature comprised between 120 and 350°C, preferably from 150 to 250°C,
the microfluidic circuit (39) being
- made of a conductive polymer, or
- made of copper, steel, aluminium, stainless steel or a metal alloy,
the heating means (34a, 34b) being fixed at least on a first face of the microfluidic circuit (39).

2. The microfluidic pre-concentrator (30) according to claim 1, the heating means (34a, 34b) comprising at least one ceramic heating element.

3. The microfluidic pre-concentrator (30) according to one of the preceding claims, the heating means (34a, 34b) being at least fixed on a first face and a second face of the microfluidic circuit (39) opposite the first face of the microfluidic circuit.

4. The microfluidic pre-concentrator (30) according to one of the preceding claims, the microfluidic pre-concentrator also comprising means for retaining the adsorption means inside the microfluidic circuit (39), the retaining means being porous to a gas, temperature resistant and chemically inert.

5. The microfluidic pre-concentrator (30) according to one of the preceding claims, the adsorption means comprising a chemical adsorbent from graphitised carbon black, compounds consisting of metal ions and organic ligands, mesoporous silicas, zeolite compounds or combinations of at least two of these chemical adsorbents.

6. The microfluidic pre-concentrator (30) according to one of the preceding claims, the microfluidic circuit (39) being made of aluminium.

7. The microfluidic pre-concentrator (30) according to one of the preceding claims, the microfluidic circuit essentially having the shape of a rectangular parallelepiped.

8. An assembly (40, 50) comprising:
- an enclosure (41, 51a, 51b, 51c, 51d, 51e, 51f);
- a microfluidic pre-concentrator (52) according to one of claims 1 to 7;
- at least one first connector adapted to receive a gas from outside the enclosure and transfer it to the at least one input of the microfluidic circuit and at least one second connector adapted to receive a gas from the outlet of the microfluidic circuit and transfer a gas to the outside of the enclosure; and
- means (55a, 55b) for holding the microfluidic pre-concentrator inside the enclosure.

9. The assembly (40, 50) according to claim 8 comprising:
- at least one cooling means (46a, 46b) adapted to cool the microfluidic pre-concentrator (52) to ambient temperature, the cooling means preferably comprising at least one fan (46a, 46b).

10. The assembly according to one of claims 8 or 9, the holding means (55a, 55b) comprising a material from metals, glass or polymers or a combination of at least two of these materials.

11. The assembly according to one of claims 8 to 10, said at least first and second connectors being made of Teflon (PTFE) or polyetheretherketone (PEEK).

12. The assembly according to one of claims 8 to 11, the assembly comprising a battery adapted to power supply at least the heating means of the microfluidic pre-concentrator (52).

13. A system comprising:
- an assembly (40, 50) according to one of claims 8 to 12; and
- an analysis device adapted to receive gas pollutants.
